# EUROPEAN PATENT APPLICATION

(11) **EP 4 472 036 A1**
(43) Date of publication of application: **04.12.2024**
(21) Application number: 23746330.2
(22) Date of filing: 20.01.2023
(51) Int. Cl.: H02K 3/50, H01R 4/18

(54) **MOTOR, SCROLL COMPRESSOR AND PROCESSING METHOD OF MOTOR**

(30) Priority: 28.01.2022 CN 202220243504 U; 28.01.2022 CN 202210110982
(71) Applicant: Danfoss (Tianjin) Ltd., Tianjin 301700 (CN)
(72) Inventor: WANG, Meng, Tianjin 301700 (CN); LIU, Wanzhen, Tianjin 301700 (CN); LIN, Yan, Tianjin 301700 (CN); YAO, Li, Tianjin 301700 (CN); WANG, Zhenyu, Tianjin 301700 (CN); LIU, Guangqiang, Tianjin 301700 (CN); ZHANG, Wenbo, Tianjin 301700 (CN); GUO, Hangkai, Tianjin 301700 (CN); WANG, Jiangbo, Tianjin 301700 (CN); ZHANG, Jiang, Tianjin 301700 (CN); LIU, Hangbo, Tianjin 301700 (CN); LV, Feng, Tianjin 301700 (CN); TAO, Zhengwei, Tianjin 301700 (CN)
(74) Representative: Kuhnen & Wacker Patent- und Rechtsanwaltsbüro PartG mbB
(86) International application number: PCT/CN2023/073358
(87) International publication number: WO 2023/143451

(57) **Abstract**

Provided are a motor, a scroll compressor, and a processing method of a motor. The motor includes: a stator provided with a plurality of stator slots, a toothed portion being formed between any two adjacent stator slots among the plurality of stator slots, and an aluminum coil being wound in the stator slots and/or around the toothed portions to form a winding, wherein the winding includes a first connecting portion; and a lead wire, which is a copper wire and has an end portion, the end portion being connected to the first connecting portion via a first crimp terminal so as to connect the winding to an external power supply, wherein the first crimp terminal wraps and presses the end portion and the first connecting portion in an axial direction of the lead wire, and a space defined by the first crimp terminal is filled with a tin material. In the present application, the coil forming the winding in the motor is provided as an aluminum coil, and the first connecting portion of the winding and the end portion of the lead wire are crimped together by means of the first crimp terminal, and then the first crimp terminal is filled with the tin material, such that the connection between the winding and the lead wire can carry a large current, and thus the power of the motor is increased while the cost of the motor is reduced.

## Description

The present application claims the right of priority of the Chinese Patent Application No. CN 202210110982.4, filed with the China National Intellectual Property Administration on January 28, 2022 and entitled "MOTOR, SCROLL COMPRESSOR AND PROCESSING METHOD OF MOTOR", which is incorporated herein by reference.

The present application claims the right of priority of the Chinese Patent Application No. CN 202220243504.6, filed with the China National Intellectual Property Administration on January 28, 2022 and entitled "MOTOR AND SCROLL COMPRESSOR", which is incorporated herein by reference.

### Technical Field

The present application relates to motor technology field, and more particularly, to a motor applicable in a compressor, a scroll compressor and a method for processing the motor applicable in the compressor.

### Background

At present, windings used in a motor of a compressor are mainly made of copper wires, resulting in high costs. In order to reduce the costs, it is proposed to use aluminum wires as the windings of motor.

### Summary

In order to solve the above problem, the present application provides a motor for a compressor, a compressor, and a processing method of a motor for a compressor.

In a first aspect, a motor for a compressor is provided. The motor includes: a stator provided with an inner hole and a plurality of stator slots in communication with the inner hole, the plurality of stator slots being uniformly distributed in a circumferential direction of the stator, a toothed portion being formed between any two adjacent stator slots among the plurality of stator slots, and an aluminum coil being wound in the stator slots and/or around the toothed portions to form a winding, wherein the winding includes a first connecting portion; a rotor located in the inner hole, the rotor rotating by means of electromagnetic induction of the coil; and a lead wire, which is a copper wire and has an end portion, the end portion being connected to the first connecting portion via a first crimp terminal so as to connect the winding to an external power supply, wherein the first crimp terminal wraps and presses the end portion and the first connecting portion in an axial direction of the lead wire, and a space defined by the first crimp terminal is filled with a tin material.

In a second aspect, a scroll compressor is provided. The scroll compressor includes: a shell; a motor as described in the first aspect, the motor being located in the shell and configured to provide a driving force; a compression unit located in the shell and including an orbiting scroll and a fixed scroll, the orbiting scroll and the fixed scroll engaging with each other to form a compression chamber; and a crankshaft mechanism, one end of the crankshaft mechanism being connected to the orbiting scroll, and the other end of the crankshaft mechanism being connected to the motor, such that the motor drives the crankshaft mechanism so as to drive the compression unit to perform compression.

In a third aspect, a method for processing a motor for a compressor is provided. The motor includes a stator, a rotor and a lead wire, wherein the stator is provided with an inner hole and a plurality of stator slots in communication with the inner hole, the plurality of stator slots are uniformly distributed in a circumferential direction of the stator, a toothed portion is formed between any two adjacent stator slots among the plurality of stator slots, an aluminum coil is wound in the stator slots and/or around the toothed portions to form a winding which includes a first connecting portion, the rotor is located in the inner hole, the rotor rotates by means of electromagnetic induction of the coil, and the lead wire is a copper wire and has an end portion, the end portion being connected to the first connecting portion via a first crimp terminal so as to connect the winding to an external power supply; and the method includes: removing insulation from the end portion and the first connecting portion; placing the end portion and the first connecting portion into the first crimp terminal; curling the first crimp terminal by means of a crimping process to wrap and press the end portion and the first connecting portion; filling a space defined by the first crimp terminal with a tin material; and sleeving an insulating sleeve onto the first crimp terminal.

According to an embodiment of the present application, the coil forming the winding in the motor for a compressor is provided as an aluminum coil, and the first connecting portion of the winding and the end portion of the lead wire are crimped together by means of the first crimp terminal, and then the first crimp terminal is filled with the tin material, such that the connection between the winding and the lead wire can carry a large current, and thus the reliability and the maximum operating power of the motor are greatly improved while the cost of the motor is reduced.

### Brief Description of the Drawings

Fig. 1 is a schematic diagram of a compressor according to an embodiment of the present application.
Fig. 2 is a schematic structural diagram of a motor for a compressor after disassembly according to an embodiment of the present application.
Fig. 3 is a schematic structural diagram of a stator lamination of the motor in Fig. 2.
Fig. 4 is a schematic structural diagram of partial wiring of the motor in Fig. 2 before crimping.
Fig. 5 is a schematic structural diagram of the partial wiring of the motor in Fig. 4 after crimping.
Fig. 6 is a schematic structural diagram of another partial wiring of the motor in Fig. 2 before crimping.
Fig. 7 is a schematic structural diagram of the other partial wiring of the motor in Fig. 6 after crimping.
Fig. 8 is a flowchart of a processing method of a motor for a compressor according to an embodiment of the present application.

### Detailed Description of the Embodiments

In order to facilitate understanding of the present application, the present application will be described in more detail below on the basis of exemplary embodiments with reference to the accompanying drawings. In the drawings, identical or similar reference signs are used to indicate identical or similar components. It should be understood that the drawings are merely illustrative.

In a motor with an aluminum-wire winding, a lead wire for connecting the winding to an external power supply is typically a copper wire; and when the lead wire is connected to the winding, a conventional connection method results in low electrical conductivity at the connection, which is prone to ablation. Therefore, the power of the motor with the aluminum-wire winding is relatively low. An embodiment of the present application provides a motor for a compressor. Generally, a compressor is used in the field of air conditioning or refrigeration. The compressor is a machine capable of converting mechanical energy into latent energy which can be used for compressing a fluid, and may be specifically a reciprocating compressor, a scroll-type compressor (also known as a scroll compressor), a centrifugal compressor and a vane compressor.

A use method and a structure of a motor in the will be described below by taking the scroll compressor as an example.

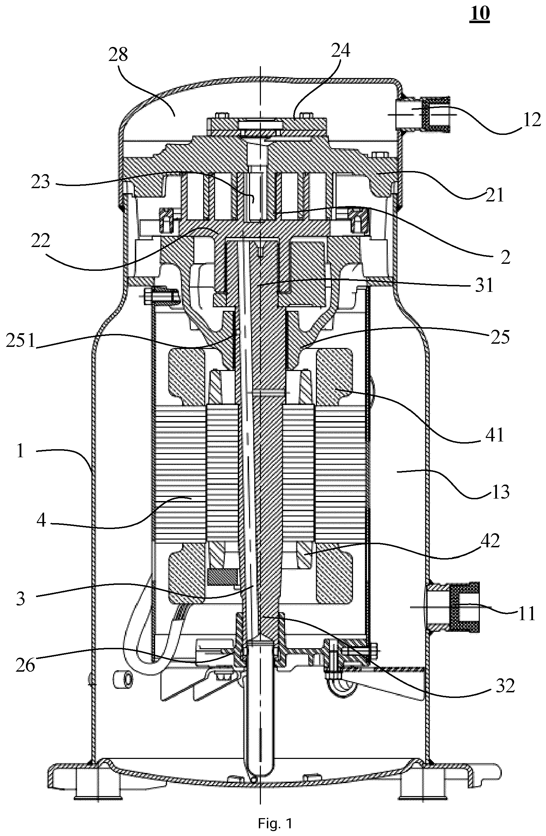

As shown in Fig. 1, a scroll compressor 10 may include a shell 1, a compression unit 2, a crankshaft mechanism 3, and a motor 4.

The shell 1 may be provided with a suction port 11 and a discharge port 12, which may be respectively configured to suck in and discharge a gas. A closed space 13 may also be defined inside the shell 1, and the compression unit 2, the crankshaft mechanism 3 and the motor 4 are located in the closed space 13.

The compression unit 2 may include a fixed scroll 21 and an orbiting scroll 22. A scroll wrap of the fixed scroll 21 and a scroll wrap of the orbiting scroll 22 mesh or engage with each other to form a compression chamber 23. The fixed scroll 21 is disposed above the orbiting scroll 22, and a discharge valve 24 is disposed on the fixed scroll 21 so as to communicate same with the compression chamber 23. The orbiting scroll 22 is movably supported on a support 25.

The crankshaft mechanism 3 is located below the orbiting scroll 22 and connected to the orbiting scroll 22, such that the orbiting scroll 22 moves as the crankshaft mechanism 3 rotates. The support 25 has a through hole 251 at its center, and one end 31 of the crankshaft mechanism 3 may be connected to the orbiting scroll 22 by means of the through hole 251. Part of a shaft of the crankshaft mechanism 3 is connected to the motor 4, and the other end 32 of the crankshaft mechanism 3 may pass through the motor 4 and be supported on a bottom supporting frame 26.

The motor 4 is located below the closed space 13 in the shell 1 and fixedly connected to the crankshaft mechanism 3. The motor 4 may be a driving motor configured to drive the crankshaft mechanism 3 to rotate, so as to drive the orbiting scroll 22 to move.

When the scroll compressor 10 operates, a gas is sucked in from the suction port 11, and the crankshaft mechanism 3 may rotate, via the drive of the motor 4, in a clockwise or counter-clockwise direction, so as to drive the orbiting scroll 22 to perform a small-radius movement around the center of a base circle of the fixed scroll 21. This movement may cause the volume of the compression chamber 23 formed by the engagement between the orbiting scroll 22 and the fixed scroll 21 to gradually reduce, so that the gas in the compression chamber 23 is compressed into a high-temperature and high-pressure gas. The high-temperature and high-pressure gas may be discharged from the discharge valve 24 to a high-pressure cavity 28 as the orbiting scroll 22 moves. In this case, the discharge valve 24 may also be configured to prevent backflow of the gas from the high-pressure cavity 28. Finally, the gas in the high-pressure cavity 28 may be discharged through the discharge port 12. By repeating the above process, corresponding operations of gas suction, compression and discharge can be repeatedly executed by the scroll compressor 10 so as to continuously generate high-temperature and high-pressure gas by the scroll compressor 10.

As shown in Fig. 1, the motor 4 includes a stator 41 and a rotor 42. It can be understood that the motor 4 may further include other relevant components (such as a housing). However, the core concept of the present application mainly lies in the stator and rotor of the motor in the scroll compressor. Therefore, the present application only describes the structures related to the stator and the rotor in the motor in detail.

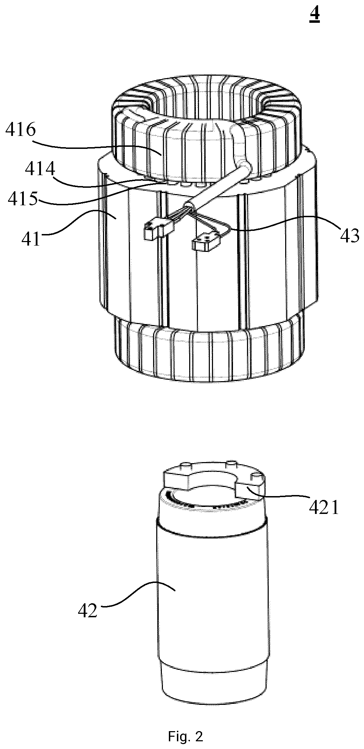

The motor in the present application may be an electromagnetic induction motor, for example, a single-phase induction motor or a three-phase induction motor. Alternatively, the motor may also be an electronically commutated motor, a hysteresis synchronous motor, etc. The structure of the motor will be described in detail below with reference to Fig. 2 by taking an electromagnetic induction motor as an example.

As shown in Fig. 2, the motor 4 may include a stator 41, a rotor 42 and a lead wire 43.

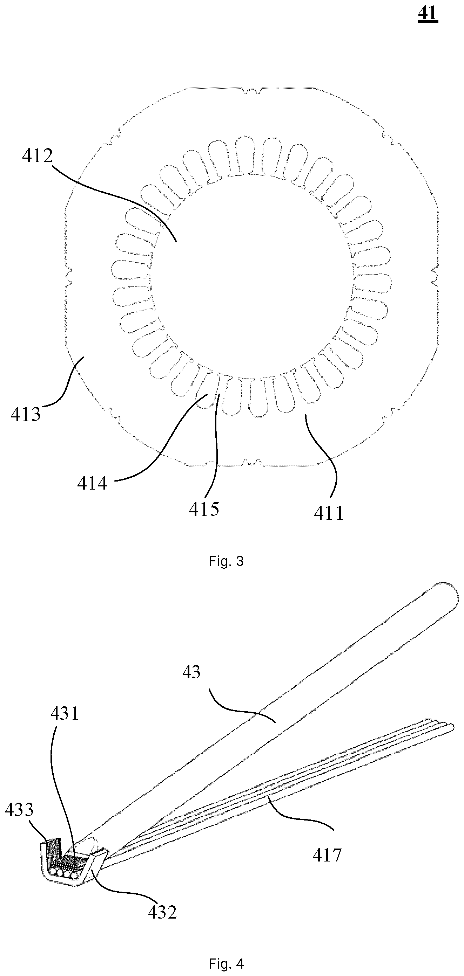

With reference to Fig. 3, it can be seen that the stator 41 includes a stator core 411 and an inner hole 412. The stator core 411 is substantially in a cylindrical shape or other feasible shapes. The stator core 411 includes a ring-shaped magnetic yoke portion 413, a plurality of stator slots 414, and a toothed portion 415 located between any two adjacent stator slots 414. The inner hole 412 is located at the center of the stator core 411 and configured to accommodate the rotor 42. The inner hole 412 is in communication with the plurality of stator slots 414, and the plurality of stator slots 414 may be uniformly distributed in a circumferential direction of the inner hole 412 of the stator. As shown in Fig. 2, a coil is wound around the stator slots 414 and/or the toothed portions 415 to form a winding 416. Specifically, an aluminum coil is wound back and forth around the toothed portions 415 in an axial direction of the stator slots 414 to form the winding 416. The winding may be, for example, a single-phase winding or a three-phase winding, which is configured to generate a rotating magnetic field. The winding 416 may include a first connecting portion (not shown in Figs. 2 and 3) for external connection. The external connection may be understood as the connection with a connecting wire (for example, the lead wire 43 in the embodiments of the present application) apart from the winding. The coil forming the winding 416 may be a coil made of an aluminum-containing material, for example, a pure aluminum coil, an aluminum alloy coil, a copper-aluminum hybrid coil, etc. Therefore, the cost of the motor can be reduced.

Specifically, as shown in Fig. 3, the plurality of toothed portions 415 are arranged on an inner surface of the magnetic yoke portion 413, and protrude inwardly toward the center of the stator core 411 in a radial direction of the magnetic yoke portion 413 from respective proximal ends adjacent to the magnetic yoke portion 413, and respective distal ends terminate at the inner hole 412, so that the inner hole 412 is substantially jointly defined by the distal ends of the toothed portions 415. The inward distal ends of the toothed portions 415 may be dovetail-shaped protrusions as shown in Fig. 3, and are configured to define an inner hole 412 that has a better accommodating capacity for the rotor. The stator slots 414 may be in the shape of a droplet that increasingly widens outwardly in the radial direction and configured so that the winding is better wound therein, and the stator slots shown are easily machined.

With continued reference to Fig. 2, the rotor 42 has a conductor and is rotatably inserted into the inner hole 412 of the stator 41. The conductor may be an aluminum bar. The rotor 42 may rotate by means of electromagnetic induction of the coil of the stator 41. A counterweight 421 may be disposed on the rotor 42.

Referring to Fig. 4, the lead wire 43 may have an end portion 431 for connection with a first connecting portion 417 of the winding 416 by means of a first crimp terminal 432, so that the winding 416 can be connected to an external power supply by means of the end portion 431 of the lead wire 43 and the first crimp terminal 432. In some applications, the lead wire 43 may be a copper wire.

The inventors have found that when the lead wire 43 which is a copper wire is connected to the winding 416 which is an aluminum wire, the wires may be connected together by means of a crimp terminal or ultrasonic soldering. However, both connection means have certain drawbacks. The crimp terminal has a limited crimping force and a very poor connection force, and is prone to ablation at a connection point. Therefore, a motor using a crimp terminal only has a weak current-carrying capability. In the connection means using ultrasonic soldering, it is necessary to perform the ultrasonic soldering after the copper wire and the aluminum wire are wound and tightened, the contact area between the copper wire and the aluminum wire at the connection point is large in this means, and the metal wires on a contact surface are also different materials, and heat generated by a current is very prone to building up here and cause ablation, and thus the motor using ultrasonic soldering only also has a weak current-carrying capability.

In conclusion, the method of using a crimp terminal or ultrasonic soldering to connect the lead wire 43 which is a copper wire to the winding 416 formed by a coil made of an aluminum-containing material is suitable for a motor having a low power, for example, less than two kilowatts. However, requirements for a performance of the compressor become higher in the field of machinery with the development of the industry, and there is an urgent need for a high-power and low-cost motor for the compressor.

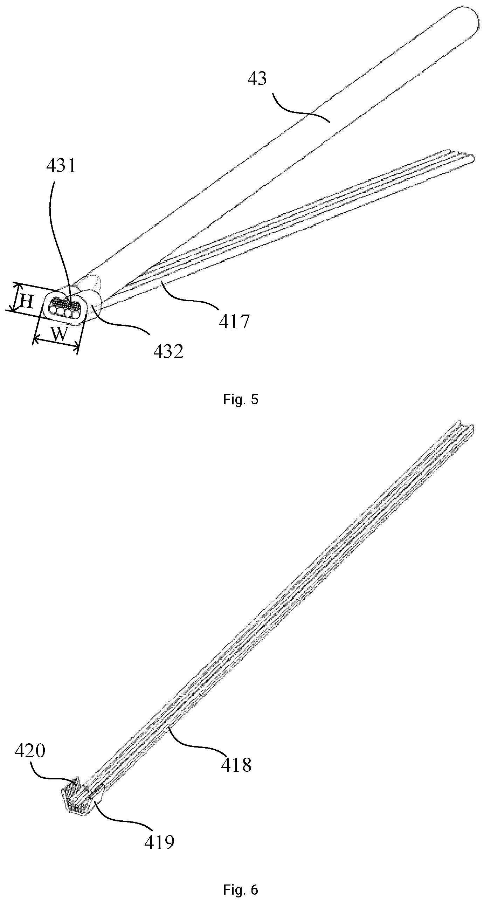

In view of this, as shown in Figs. 4 and 5, in the present application, the first crimp terminal 432 may wrap and press the end portion 431 and the first connecting portion 417 in an axial direction of the lead wire 43, and a space defined by the first crimp terminal 432 is filled with a tin material. A wrapping and pressing method is not specifically limited in the present application. For example, the crimping may be performed by using a high-speed terminal crimping machine (hereinafter referred to as a terminal machine).

In an embodiment of the present application, the coil forming the winding in the motor is provided as a coil made of an aluminum-containing material, for example, a pure aluminum coil, a copper-aluminum hybrid coil, an aluminum alloy coil, etc., the first connecting portion of the winding and the end portion of the lead wire are crimped together by means of the first crimp terminal, and then the space defined by the first crimp terminal is filled with the tin material, such that the winding comes into contact with the lead wire by means of the tin material, and thus the connection can carry a large current. In this way, the power of the motor can be increased while the cost of the motor is reduced. For example, by using this connection method in the motor in the embodiment of the present application, the power of the motor can be greater than or equal to 10 kilowatts. For example, the rated power may be 13.5 kilowatts at 50 Hz, and the rated power may be 16 kilowatts at 60 Hz.

The structure of the first crimp terminal 432, and the connection structure for the first crimp terminal 432, the first connecting portion 417 and the end portion 431 are not specifically limited in the embodiments of the present application. As shown in Fig. 4, an inner surface of the first crimp terminal 432 may be provided with a plurality of grooves 433 for accommodating the tin material described above. The plurality of grooves 433 are uniformly distributed in the same extension direction, and the extension direction of the grooves 433 and an axial direction of the first connecting portion 417 form a fixed included angle, which is greater than 0°, but less than or equal to 90°. That is, the end portion 431 of the lead wire 43 and the first connecting portion 417 of the winding 416 are not clamped in the grooves 433, but are located on upper surfaces of the plurality of grooves 433, and the interiors of the grooves 433 in the first crimp terminal 432 and a gap between the first crimp terminal 432, the first connecting portion 417 and the end portion 431 are all filled with the tin material. Especially, when the included angle is not equal to 90°, for example, is 30°, the arrangement of the grooves can also have the effect of guiding the tin material. By providing the grooves 433 and configuring the extension direction of the grooves to form the included angle that is greater than 0°, but less than 90° with the axial directions of the first connecting portion 417 and the lead wire 43, apart from the contact surface region, the connection between the end portion and the first connecting portion may be filled with more tin material. Therefore, when a large current is carried, the current can flow through the tin material, so that heat is prevented from building up at the contact surface, it is not prone to ablation, and the motor has a high power.

In some implementations, as shown in Fig. 4, before the end portion 431 of the lead wire 43 and the first connecting portion 417 of the winding 416 are wrapped and pressed by using the first crimp terminal 432, insulation may be removed from outer surfaces of the first connecting portion 417 and the end portion 431. The part of the first connecting portion 417 from which the insulation is removed may be referred to as a first part, and the part of the end portion 431 from which the insulation is removed may be referred to as a second part. The axial lengths of the first part and the second part are both greater than the axial length of the first crimp terminal 432. By removing the insulation, the electrical conductivity between the end portion 431 and the first connecting portion 417 can be higher, so that a larger current can be carried.

An insulation removal method and an insulation removal depth are not specifically limited in the present application. For example, the insulation may be removed by using a scraper. For example, the removal depth may exceed the insulation thickness, or in some implementations, the insulation removal depth may be less than or equal to 0.1 millimeters.

Furthermore, in some implementations, before the end portion 431 of the lead wire 43 and the first connecting portion 417 of the winding 416 are wrapped and pressed by using the first crimp terminal 432, the end portion 431, the first connecting portion 417, and one end of the first crimp terminal 432 may be placed flush with one another and then wrapped and pressed. By placing the end portion 431, the first connecting portion 417 and the one end of the first crimp terminal 432 flush with one another, the problem of inaccurate positioning when pressing is performed by using a terminal machine can be prevented. The outer surface of the first crimp terminal after being wrapped and pressed may also be coated with the tin material. It can be understood that in the present application, filling the space defined by the first crimp terminal with the tin material and coating the outer surface of the first crimp terminal with the tin material can be completed directly with one or two processes. For example, the first crimp terminal after being wrapped and pressed is completely immersed in the molten tin material, or the first crimp terminal after being wrapped and pressed is completely immersed in a special soldering flux, and then the first crimp terminal is completely immersed in the molten tin material. By placing the end portion 431, the first connecting portion 417, and the one end of the first crimp terminal 432 flush with one another and then performing wrapping, pressing and tin-dipping, the space defined by the first crimp terminal 432 can be uniformly filled with the tin material, so that the electrical conductivity is more stable.

The tin-dipping length and the tin-dipping time are not specifically limited in the present application. For example, the tin-dipping time may be greater than or equal to 2 seconds. By setting the tin-dipping time to exceed 2 seconds, the space to be tin-dipped can be completely filled with the tin material, so that the problem of pseudo soldering can be avoided. The outer surfaces of the first connecting portion and the end portion are also coated with the tin material after tin-dipping, and the coating length of the tin material on the first connecting portion may be greater than the axial length of the part (i.e. the first part mentioned above) of the first connecting portion 417 from which the insulation is removed. The coating length of the tin material on the end portion may be greater than the axial length of the part (i.e. the second part mentioned above) of the end portion 431 from which the insulation is removed. That is to say, respective parts of the first connecting portion 417 and the end portion 431 from which no insulation is removed may also be coated with the tin material.

Furthermore, in some implementations, after the space defined by the first crimp terminal is filled with the tin material and the outer surface of the first crimp terminal is coated with the tin material, an insulating sleeve may further be disposed outside the first crimp terminal. The form of the insulating sleeve is not specifically limited in the present application, and any bushing-like insulating sleeve may be used, for example, a heat-shrinkable sleeve or a sleeve formed by using an insulating tape may be used.

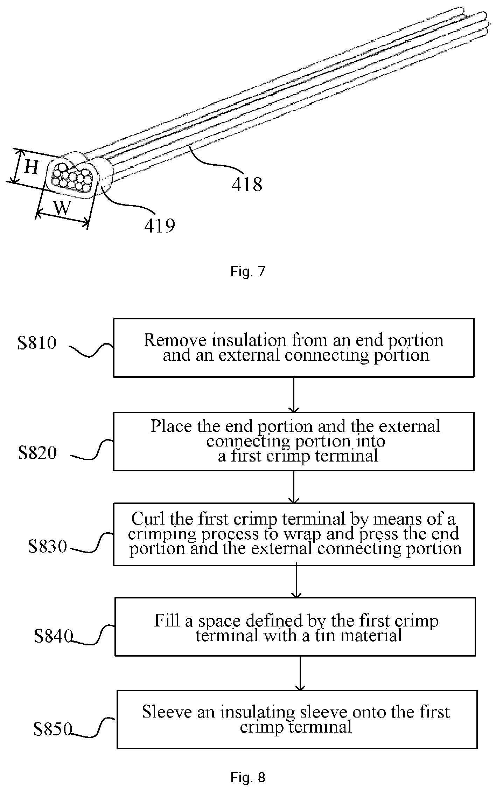

As described above, the motor may be a three-phase induction motor. Therefore, in some implementations, the winding 416 may be a three-phase winding, and each phase winding of the three-phase winding includes a second connecting portion (not shown in Figs. 1-5) which may be configured for internal connection. In the embodiments of the present application, the internal connection may refer to the connection between one winding and another winding. The motor 10 may further include a second crimp terminal (not shown in Figs. 1-5) which wraps and presses the second connecting portion in an axial direction of the second connecting portion. As shown in Figs. 6 and 7, the second connecting portion 418 and one end of the second crimp terminal 419 may be disposed flush with each other, and a space defined by the second crimp terminal 419 is filled with the tin material. Furthermore, an outer surface of the second crimp terminal 419 may also be coated with the tin material.

In some other embodiments, insulation may be removed from the outer surface of the second connecting portion 418, and the part of the second connecting portion 418 from which the insulation is removed may be referred to as a third part. The axial length of the third part may be set to be greater than the axial length of the second crimp terminal 419.

Optionally, as shown in Fig. 6, an inner surface of the second crimp terminal 419 is provided with a plurality of grooves 420.

Optionally, the outer surface of the second connecting portion 418 may also be coated with the tin material, and the coating length of the tin material thereon is greater than or equal to the axial length of the third part.

It can be understood that the structure of the second crimp terminal 419 and the connection structure and means for the second crimp terminal 419 and the second connecting portion 418 are the same as or similar to the structure of the first crimp terminal 432 and the connection structure and means for the first crimp terminal 432, the first connecting portion 417 and the end portion 431, and only the structures are named differently; therefore, the same or similar parts are not described herein again, and reference may be made to the specific implementation of the aforementioned connection structure and means.

The device claims of the present application are described above in detail with reference to Figs. 1-7. A method embodiment of the present application is described in detail below with reference to Fig. 8. It should be understood that the description of the method embodiment corresponds to the description of the device embodiment, and therefore, for a part not described in detail, reference may be made to the foregoing device embodiment.

Fig. 8 is a schematic flowchart of a processing method of a motor according to an embodiment of the present application, the motor having the structure as described above.

Referring to Fig. 8, in step S810, insulation is removed from the end portion and the first connecting portion.

The insulation removal method and the insulation removal depth are not specifically limited in the present application. For example, an insulating skin may be cleared by a scraper. The scraping depth in the present application may be less than or equal to 0.1 millimeters, and after the insulation is removed, the dimension of the first wiring harness of the same specification needs to be confirmed by a micrometer in order to ensure accuracy.

In step S820, the end portion and the first connecting portion are placed into the first crimp terminal.

The first crimp terminal may be placed in a mold of a terminal machine. Before the end portion and the first connecting portion are placed into the first crimp terminal, the mold can be cleaned first, and respective models of the first crimp terminal and the mold can be confirmed. In some implementations, before the two portions are placed into the first crimp terminal, it is checked whether a crimping piece of the terminal machine is mounted in place, whether a punch, a blade and tooling are damaged, etc. Alternatively, it is also possible to confirm whether the maximum stamping force of the terminal machine can meet a preset condition or whether the strength of the crimping mold reaches a preset condition.

In step S830, the first crimp terminal is curled by means of a crimping process to wrap and press the end portion and the first connecting portion.

The crimping process may refer to processing by means of the terminal machine. Curling the first crimp terminal to wrap and press the end portion and the first connecting portion refers to crimping the first crimp terminal by means of the terminal machine, such that the first crimp terminal wraps the wire harness formed as the first connecting portion as well as the wire harness formed as the end portion.

Before crimping, a power supply of the terminal machine can be turned on to check strokes of the punch and the blade. In some implementations, before crimping, it is also possible to use a scrapped product for trial crimping to ensure that the wire harnesses do not fall off while ensuring the crimping size.

In order to ensure the crimping quality, before crimping, it is also necessary to check whether the wire harness (the wire harness formed as the first connecting portion of the coil and/or the wire harness formed as the end portion of the lead wire) is too long. After it is confirmed that the wire harnesses meet standards, the end portion and the first connecting portion are then both placed into the first crimp terminal, and should be placed as flat as possible. For example, the end portion, the first connecting portion and one end of the first crimp terminal are placed flush with one another.

In some implementations, the wire harnesses may also be combed to prevent entanglement between wires.

After the above operation is completed, a crimping button may be started to crimp each of the end portion and the first connecting portion. When the motor is a three-phase induction motor, it is necessary to crimp the first connecting portion of a U wire and the end portion of the lead wire of the U wire, the first connecting portion of a V wire and the end portion of the lead wire of the V wire, and the first connecting portion of a W wire and the end portion of the lead wire of the W wire. After the crimping is completed, it is possible to check whether each crimping piece is crimped uniformly without burrs, whether a cut end surface is flat, whether there is a wire harness which protrudes or is recessed, etc., and then the width and the height of the first crimp terminal are measured (for example, by using a micrometer) as required, in order to ensure the crimping strength.

In step S840, a space defined by the first crimp terminal is filled with a tin material.

A method for filling the space defined by the first crimp terminal with the tin material is not specifically limited in the present application. For example, the first crimp terminal after being wrapped and pressed is completely immersed in the molten tin material (this method may be referred to as a tin-dipping soldering method), or the first crimp terminal after being wrapped and pressed is completely immersed in a special soldering flux, and then the first crimp terminal is completely immersed in the molten tin material. In this way, the interior of the first crimp terminal can be quickly and easily filled with the tin material. In some implementations, in order to ensure the soldering quality, the tin-dipping time may be set to be greater than or equal to 2 seconds, so that the soldering quality can be ensured and pseudo soldering can be avoided. Alternatively, after the space defined by the crimp terminal is filled with the tin material, it is also possible to further detect whether there is pseudo soldering between the wire harnesses, that is, detect whether the tin-dipping between the wire harnesses is thorough (for example, detect whether there is a pore), and whether a contour is round without sharp points.

The tin-dipping depth is not specifically limited in the present application. For example, the tin-dipping length is greater than the aforementioned insulation removal length.

In step S850, an insulating sleeve is sleeved onto the first crimp terminal. The type of the insulating sleeve is not specifically limited in the present application, for example, a heat-shrinkable sleeve or a sleeve formed by an insulating tape may be used. By providing the heat-shrinkable sleeve, metal wires can be prevented from being further oxidized, and the sleeving method is relatively simple and makes processing easy.

It can be understood that the connection method for the second crimp terminal and the second connecting portion is the same as or similar to the connection method for the first crimp terminal, the first connecting portion and the end portion, and only the structures are named differently; therefore, the same parts are not described herein again, and reference may be made to the specific implementation of the aforementioned connection method. The difference lies in that if the three-phase winding of the motor is in a "Y" connection, it is necessary to crimp all the second connecting portions of the three windings together by means of the second crimp terminal. If the three-phase winding of the motor is in a triangular connection, it is necessary to crimp the second connecting portions of every two of the three windings together by means of the second crimp terminal.

In the embodiments of the present application, in order to ensure the crimping strength, crimping parameters (such as a crimping width and a crimping height) of the crimp terminal may be adjusted. For example, the crimping parameters of the crimp terminal may meet the following requirements: 2.4 ≤ (crimping width × crimping height)/total wire area ≤ 3. In order to more clearly explain the crimping width and the crimping height, with reference to Figs. 5 and 7, the crimping width is the width of the part marked with the dimension "W" on the crimp terminal in Fig. 5 or 7 after crimping is completed, and the crimping height is the height of the part marked with the dimension "H" in Fig. 5 or 7. When the crimp terminal is the first crimp terminal, the total wire area is the sum of the cross-sectional area of the metal wire (for example, any one of the U wire, V wire or W wire described above) of the first connecting portion and the cross-sectional area of the lead wire. When the crimp terminal is the second crimp terminal, the total wire area is the sum of the cross-sectional areas of the metal wires of the second connecting portions that need to be crimped. For example, if the motor is a three-phase winding in a "Y" connection, the total wire area is the sum of the cross-sectional areas of the metal wires of the second connecting portions of the three windings; if the motor is in a triangular connection, the total wire area is the sum of the cross-sectional areas of the metal wires of the second connecting portions of every two of the three windings.

The coil forming the winding in the motor processed by means of the motor processing method according to the embodiments of the present application is provided as an aluminum coil, and the first connecting portion of the winding and the end portion of the lead wire are crimped together by means of the first crimp terminal, and then the first crimp terminal is filled with the tin material, such that the connection between the winding and the lead wire can carry a large current, and thus a contact part thereof has high electrical conductivity. This effect is well embodied in a current detection experiment of the motor of the present application. In a test case where the average temperature of the motor does not exceed 150°C when operating at a rotating speed of 150 K for 4 S, no ablation occurs. It can be seen that the aluminum-wire motor has a lower cost, and compared with an aluminum-wire motor using an existing connection method, the aluminum-wire motor manufactured by the processing method according to the embodiments of the present application can have higher reliability and can have increased power, for example, can be increased by an additional 5%.

What are described above are merely preferred embodiments of the present application are not intended to limit the present application. Any modification, equivalent substitution, etc. performed within the spirit and principle of the present application should all fall within the scope of protection of the present application.

## Claims

1. A motor for a compressor, comprising:
a stator provided with an inner hole and a plurality of stator slots in communication with the inner hole, the plurality of stator slots being uniformly distributed in a circumferential direction of the stator, a toothed portion being formed between any two adjacent stator slots among the plurality of stator slots, and a coil made of an aluminum-containing material being wound in the stator slots and/or around the toothed portion to form a winding, wherein the winding comprises a first connecting portion;
a rotor located in the inner hole, the rotor rotating by means of electromagnetic induction of the coil; and
a lead wire, which is a copper wire and has an end portion, the end portion being connected to the first connecting portion via a first crimp terminal so as to connect the winding to an external power supply,
wherein the first crimp terminal wraps and presses the end portion and the first connecting portion in an axial direction of the lead wire, and a space defined by the first crimp terminal is filled with a tin material.

2. The motor as claimed in claim 1, wherein the end portion, the first connecting portion and one end of the first crimp terminal are flush with one another, and an outer surface of the first crimp terminal is coated with the tin material.

3. The motor as claimed in claim 2, wherein the first connecting portion comprises a first part with insulation removed, the end portion comprises a second part with insulation removed, and an axial length of the first part and an axial length of the second part are both larger than an axial length of the first crimp terminal.

4. The motor as claimed in claim 1, wherein an insulating sleeve is disposed outside the first crimp terminal.

5. The motor as claimed in claim 1, wherein the winding is a three-phase winding, each phase winding of the three-phase winding comprises a second connecting portion, a second crimp terminal wraps and presses the second connecting portion in an axial direction of the second connecting portion, the second connecting portion and one end of the second crimp terminal are flush with each other, an outer surface of the second crimp terminal is coated with the tin material, and a space defined by the second crimp terminal is filled with the tin material.

6. The motor as claimed in claim 5, wherein the second connecting portion comprises a third part with insulation removed, and the axial length of the third part is longer than an axial length of the second crimp terminal.

7. The motor as claimed in claim 5, wherein respective inner surfaces of the first crimp terminal and the second crimp terminal are each provided with a plurality of grooves.

8. The motor as claimed in claim 7, wherein the plurality of grooves are uniformly distributed in the same extension direction, and the extension direction and an axial direction of the first connecting portion form a fixed included angle which is greater than 0°, but less than 90°.

9. The motor as claimed in claim 1, wherein the power of the motor is selected from one of: greater than or equal to 10 kilowatts, equal to 13.5 kilowatts, and equal to 16 kilowatts.

10. The motor as claimed in claim 3, wherein respective outer surfaces of the first connecting portion and of the end portion are both coated with the tin material.

11. The motor as claimed in claim 6, wherein an outer surface of the second connecting portion is coated with the tin material.

12. The motor as claimed in claim 10, wherein a coating length of the tin material on the first connecting portion is greater than the axial length of the first part, and a coating length of the tin material on the end portion is greater than the axial length of the second part.

13. The motor as claimed in claim 11, wherein a coating length of the tin material on the second connecting portion is greater than the axial length of the third part.

14. The motor as claimed in claim 5, wherein the range of a crimping parameter of the first crimp terminal or the range of a crimping parameter of the second crimp terminal is: 2.4 ≤ (crimping width x crimping height)/total wire area ≤ 3.

15. A scroll compressor, comprising:
a shell;
the motor according to claim 1, located in the shell and configured to provide a driving force;
a compression unit located in the shell and comprising an orbiting scroll and a fixed scroll, the orbiting scroll and the fixed scroll engaging with each other to form a compression chamber; and a crankshaft mechanism, one end of the crankshaft mechanism being connected to the orbiting scroll, and the other end of the crankshaft mechanism being connected to the motor, such that the motor drives the crankshaft mechanism so as to drive the compression unit to perform compression.

16. A method for processing a motor of a compressor, the motor comprising a stator, a rotor and a lead wire, wherein the stator is provided with an inner hole and a plurality of stator slots in communication with the inner hole, the plurality of stator slots are uniformly distributed in a circumferential direction of the stator, a toothed portion is formed between any two adjacent stator slots among the plurality of stator slots, an aluminum coil is wound in the stator slots and/or around the toothed portion to form a winding which comprises a first connecting portion, the rotor is located in the inner hole, the rotor rotates by means of electromagnetic induction of the coil, and the lead wire is a copper wire and has an end portion, the end portion being connected to the first connecting portion via a first crimp terminal so as to connect the winding to an external power supply; wherein the method comprises:
removing insulation from the end portion and the first connecting portion;
placing the end portion and the first connecting portion into the first crimp terminal;
curling the first crimp terminal by means of a crimping process to wrap and press the end portion and the first connecting portion;
filling a space defined by the first crimp terminal with a tin material; and
sleeving an insulating sleeve onto the first crimp terminal.

17. The processing method as claimed in claim 16, wherein before curling the first crimp terminal by means of the crimping process to wrap and press the end portion and the first connecting portion, the method comprises
disposing the end portion, the first connecting portion and the first crimp terminal flush with one another.

18. The processing method as claimed in claim 16, wherein the insulation removal depth is less than 0.1 millimeters.

19. The processing method as claimed in claim 16, wherein the step of filling the space defined by the first crimp terminal with the tin material comprises:
filling the space defined by the first crimp terminal with the tin material by means of tin-dipping soldering, and the tin-dipping time is greater than or equal to 2 seconds.

20. The processing method as claimed in claim 16, wherein the insulating sleeve is a heat-shrinkable sleeve.
